# EUROPEAN PATENT APPLICATION

(11) **EP 4 641 414 A1**
(43) Date of publication of application: **29.10.2025**
(21) Application number: 24382437.2
(22) Date of filing: 23.04.2024
(51) Int. Cl.: G06F 21/44, G06F 21/45, G06F 40/279, G06F 40/35, G06Q 20/08, G06Q 30/015, G07C 9/00, G07F 17/12

(54) **SMART LOCKER SYSTEM AND CONVERSATIONAL ACCESS PROCEDURE FOR SMART LOCKER SYSTEMS**

(71) Applicant: Lockme Access S.L., 08201 Sabadell Barcelona (ES)
(72) Inventor: Comas Pérez, Roger, Sabadell (Barcelona) (ES); Xirau Torres, Iban, Sabadell (Barcelona) (ES)
(74) Representative: Pons IP

(57) **Abstract**

Smart locker system comprising a locker cabinet with multiple lockers and a control unit configured to decrypt and validate Key Response codes; a cloud-based locker engine module with a chat management unit using Natural Language Processing, a database, comprising data of the lockers and users, a backend module and a back-office module for admins; and a communications module, connecting the control unit of the locker cabinet to the cloud-based locker engine. The system is controlled by a smart locker conversational access procedure comprising: starting a conversation on a chat/conversation platform as a response of a user request by using Natural Language Processing; identifying the user by its telephone number; querying database for checking availability; generating and validating payment links as a function of minutes of service, generating a Key Response code for opening a locker; decrypting the KR provided by the user to the locker cabinet; and opening a locker.

## Description

### OBJECT OF THE INVENTION

The invention is referred to the field of lockers, more particularly, to the field of smart lockers for automatic management.

The object of the invention is a smart locker access procedure which allows to manage the lockers automatically by means of chat conversations with a user via external conventional chat/conversational platforms.

### BACKGROUND ART

Smart lockers are lockers comprising processing means to manage its opening or closing. The field of smart lockers continuously tries to increase the functionalities of the lockers and to automatize its control.

Some of these improvements known in the art are based in the use of wireless connection for remotely controlling the use of the lockers.

Also, it is known in the art the use of QR codes for identification of users and for opening lockers. In these systems, it is common to include tactile displays and QR readers for operating the lockers in-situ.

Other improvements recently incorporated in this type of systems is to use sensors in the lockers and to implement alarms to avoid vandalism.

Nevertheless, the solutions known in the art are more focused on adding functionalities and sensors and not on facilitating the use of lockers for the user. Thus, an improvement in smart lockers is needed to make it easier the controlling for the user.

### DESCRIPTION OF THE INVENTION

The present invention discloses a smart locker access procedure which allows to efficiently manage lockers providing to the user an easy way to store personal belongings. The smart locker access procedure of the invention is based on the combination of Natural Language Processing Techniques and smart locker systems.

The Smart locker system of the invention comprises at least one locker cabinet, a cloud-based lockers engine module and a communication module, preferably comprising a communication gateway and a modem connected to the control unit to connect it to internet.

In the system of the invention a locker cabinet comprises:
∘ One or more lockers comprising with electronic locks.
∘ A control unit configured to decrypt and validate a Key Response code. The control unit comprises: a processing unit, a QR reader and/or a pin pad and, preferably, a touch screen.

In turn, the cloud-based lockers engine module comprises:
∘ A chat management unit using Natural Language Processing techniques for managing a conversation with a user. Preferably, the chat management unit comprises end-to-end encryption.
∘ A database, comprising data of the state and usage of lockers and of the users. The database is connected to the chat management unit for synchronizing data.
∘ A backend module connected to the chat management unit and the database and configured to trigger actions based on input from the database and from the conversations with users from the chat management unit;

The communications module connects the control unit of the locker cabinet to the locker cabinet management module. Preferably, the communications module comprises a communications gateway which uses a HTTPS communication protocol.

Preferably, the locker cabinet management module could comprise a secured and encrypted connection between the chat management unit and the database.

Preferably, the cloud-based lockers engine module could also comprise a back-office module for admins containing all information of usage of the system including chat conversations with users for support and traceability of usage.

The invention also relates to a smart locker conversational access procedure which comprises a step of starting a conversation as a response of a request form a user on a chat/conversational platform. The user chats and its automatically responded by using Natural Language Processing (NLP) techniques. Preferably, a trained NLP algorithm trained to generate conversational dialogues is used for conversation with the user. Moreover, the procedure could also comprise a step of switching language as response of a request from a user in the conversation using NLP.

Then, once the conversation has been initiated, the user is identified by its telephone number. Then, a database is queried for checking availability as a response of a request to open a locker.

A Key Response code is generated and provided to the user for opening a locker. Preferably, the KR code is a QR encrypted. Then, the user provides said KR code to a locker cabinet comprising the locker for being decrypted. Once the KR code is validated, a locker from the locker cabinet is opened. Preferably, the locker opened is selected randomly. More preferably, the user is notified in the conversation when a locker is unlocked.

Preferably, before generating the Key Response, a payment step is performed by using an online payment processing platform and by generating payment tickets as a function of minutes of service.

More preferably, the payment step could comprise generating automatic payment links based on a pay-per-use rate of the lockers service and validating payments. Even more preferably, the step of validating payments is performed through webhooks.

Preferably, data for decrypting the KR code is stored in the locker cabinet, so that it is the unique capable of decrypting the KR code, even without network connection.

Preferably, the procedure of the invention could also comprise a step of checking if the user data is already stored in the system. If not, a step of inputting user data in the database by guiding the conversation with the user through Natural Language Processing techniques.

The KR code could, preferably, comprise data of: location of the locker cabinet, user ID, user type, payment time, locker ID and scheduled usage time. More preferably, the KR code is changed dynamically, so that said KR code is valid only for a time predefined.

In some embodiments, the procedure could also comprise a step, after identifying the user, of identifying if the user has admin rights. If the user is an administrator, the procedure allows requesting the status of a locker cabinet, to open lockers, to restart lockers and/or to reboot the locker cabinet, all through the conversation by using NLP and generating admin-specific KR codes.

In particular, on requesting the status of the locker cabinet, said status comprises:
- status: online, offline or in maintenance mode;
- occupancy,
- prices,
- revenue, and
- number of lockers.

As explained, the administrator could perform a step of resetting a locker, i.e. changing its status from "in use" or "blocked" to "free", or "new" if the locker is occupied. Also, the administrator could initiate a step of rebooting station, thus, shutting down and restarting the control unit, then, sending status information.

### DESCRIPTION OF THE DRAWINGS

FIG. 1 shows a diagram of the technological architecture of a preferred embodiment of the smart locker chat-based system of the invention.
FIG. 2 shows a conversational tree flow for users.
FIG. 3 shows a conversational tree flow for administrators.
FIG. 4 shows an example of the procedure of the invention when a conversation is started and the user does not exist yet in the database.
FIG. 5 shows an example of the procedure of the invention when a conversation is started and the user exists in the database.
FIG. 6 shows an example of the procedure of the invention for making a deposit and paying.
FIG. 7 shows an example of the procedure of the invention for validating payment and unlocking a locker.

### PREFERRED EMBODIMENTS OF THE INVENTION

The invention provides a smart locker system and a smart locker conversational access procedure for allowing automatic management of a locker cabinet comprising multiple lockers using Natural Language Processing (NLP) technics.

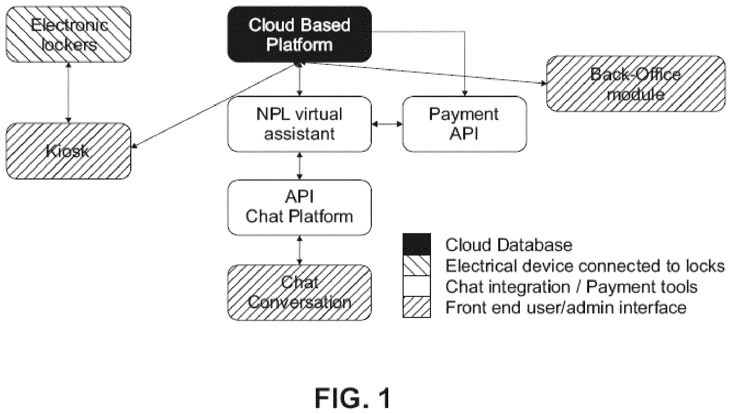

The diagram of Figure 1 displays the technological architecture of a preferred embodiment of the smart locker of the invention.

In this particular embodiment, it should be noticed that the smart locker system is based on a cloud-based architecture, allowing to operate in a scalable environment with high availability parameters and enabling real-time data storage and management.

Thanks to this architecture instant and reliable access to smart lockers is enabled. Cloud-Based Platform services for server infrastructure and databases is used, and all the communications utilize secure HTTPS communication protocols.

Additionally, the smart locker system uses a chat management unit, which preferably could be the API of WhatsApp, Telegram, Wechat, or voice chats using text2speech technologies, which employs end-to-end encryption for an added layer of security. In this way, it is ensured the confidentiality and integrity of the data exchanged between users and the smart locker system.

The invention provides an integration between Cloud Databases, a Virtual NLP Assistant, and a chat management unit, such as a chat/conversation platform's API. This integration is tailored with specific 'intents' and 'training phrases' designed for this specific application.

Also, the integration enables the creation of highly personalized chat responses and the automation of conversational dialogues with users. All of this, in turn, is integrated with cloud databases containing information about the state and usage of lockers and users. This ensures that the information provided through chat conversations is current and reflects the corresponding changes in the data structures. In other words, conversation flows and user interactions are instantly synchronized with the databases through secure and encrypted connections. This guarantees that the provided data is always up-to-date and accessible.

The system of the invention also implements an instant creation of payment tickets that originate during the conversation, serving to monetize the smart locker service. Payment links are generated through an online payment processing platform. These links are created based on the minutes of service usage in an automated manner by integrating the payment platform's API to the system of invention.

Then, the system sends said payment links during conversation to the users for payment using their preferred payment method. Once the payment is authorized, a webhook from the payment platform, linked to the virtual assistant, notifies said virtual assistant to continue the conversation and send an encrypted Key Response (KR) code that authorizes the locker's opening.

The system of the invention also enables remote operability and conversation traceability. Thus, the user can open lockers, make payments, receive status updates on their deposits, and get assistance remotely through the conversation.

Furthermore, the system could identify users with admin rights in the cloud databases, thus, enabling them to access an independent back-office module, in this case a website, to view users' conversations in real-time, providing complete traceability of conversations for support personnel or extracting usage statistics.

Also, administrators can operate the lockers on-site by means of chatting to a special admin flow in the NLP virtual assistant. Thus, when the Virtual Assistant identifies a user with admin rights it prompts a different flow of conversation, which allows admins to perform support actions such as open a given locker, restart a locker, reboot the station. All these actions are encrypted in KR codes.

In the smart locker system of the invention, user interaction with the lockers is facilitated through a Kiosk, a software running on the control unit of the locker cabinet.

The control unit comprises a micro-computer, a QR code reader and a pin-pad. Preferably, the control unit can comprise a touch screen as well. The Kiosk is responsible for validating the encrypted KR (Key Response) codes that users receive via the conversation after making payments for the service. These KR codes contain information about the location, user ID, user type, payment time, locker ID, and scheduled usage time, ensuring the proper authorization and opening of the lockers.

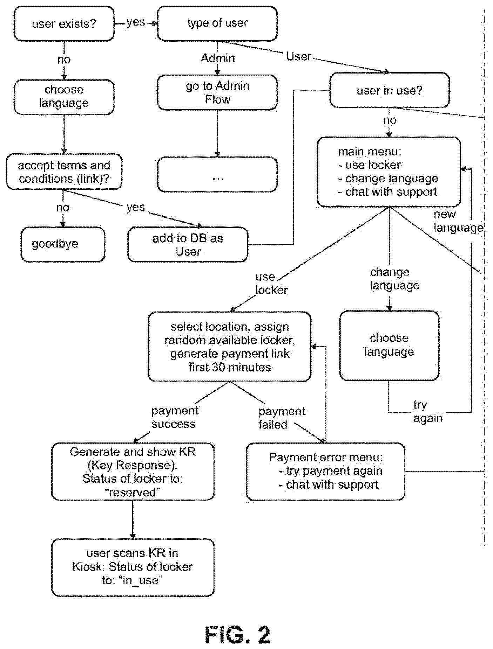

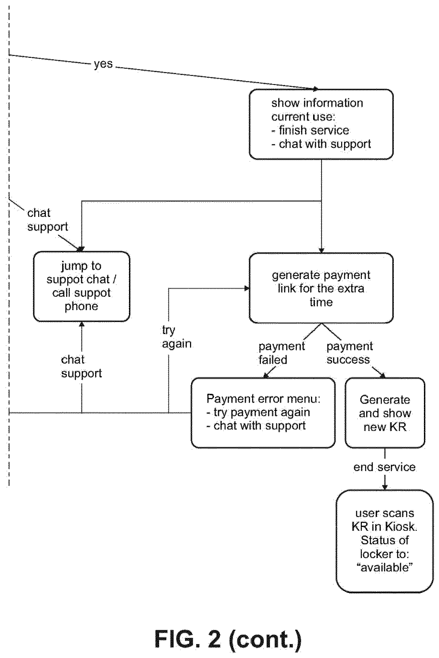

Figure 2 shows a conversational tree flow for users. This flowchart illustrates the intricate ecosystem of interactions that converge to provide a seamlessly coordinated user experience. The smart locker system enables real-time queries and updates through the cloud-based databases.

In this embodiment, the smart locker conversational access procedure comprises the steps of:
1. Conversation Start: The user initiates the conversation with the virtual assistant by simply typing any word on the chat conversation with the contact number of the system.
2. Recognition of type of user: The virtual assistant queries the User ID, in this case the phone number, to the Cloud Database. The conversational flow that will be presented next, fully depends on the type of user. If the user type corresponds to "User", then a flow to seamlessly deposit and collect belongings to the lockers is presented. In case user ID does not exist, then they need to be added to the system as Users.
3. Acceptance of Terms of Use: Users are required to accept the terms of use displayed through a link before continuing with the conversation for the first time.
4. Automated User Onboarding: Once the terms of use are accepted, the user is automatically added to the system with its unique identifier being the phone number. Additionally, the user could be addressed by its chat display name.
5. Language Switch: Users have the option to change the language of the conversation at any time.
6. Continued Personalized Responses: The virtual assistant provides information on the current status of the user, modifying the conversation based on whether the user is already using the service or if they haven't been assigned any locker yet.
7. Availability Check: The virtual assistant queries the database to check the availability of lockers at the requested location and offers a randomly available locker in that station of lockers.
8. Payment Link Creation: In case of a reservation, a payment link is generated in real-time through the API of the payment management platform for a first period of stay (e.g., 30 minutes). For pickups, a new payment link is generated based on the final duration of the stay.
9. Payment Confirmation: The user makes the payment, and a webhook from the online payment management platform notifies the system about the transaction approval to generate a Key Response (KR) code and display it in the chat conversation.
10. KR Creation: A dynamic and encrypted QR is created, named Key Response, which contains the Key information to use the system. Each KR generated by the virtual assistant is dynamic and only valid for the time defined by the system. This code is encrypted with specific user and locker information, location of the lockers, user type and time schedule of the deposit, ensuring the security and authenticity of transactions.
11. Status Update: The status of the locker and transactions is instantly synchronized with the databases, updating the status in real-time. The user status transitions from "New" to "Deposit," and the locker shifts from "available" to "reserved".
12. KR Validation at the Kiosk: The KR code generated in the WhatsApp conversation can only be decrypted by the software running on the control unit of the locker cabinet, and therefore, the Kiosk is responsible of authorizing to open a door if all encrypted KR fields meet the necessary conditions. This way, even in the most adverse conditions (if the Control Unit lacks network connection), the system is capable of verifying KR credentials and authorizing deposits and collects.
13. Locker Opening: The Control Unit verifies the authenticity of a KR and then the locker is electronically unlocked, and the user receives a notification on WhatsApp indicating that the locker has been opened, allowing him to store/retrieve his belongings.

This agile and highly coordinated process ensures that users can enjoy secure and efficient access to smart lockers and receive personalized support every step of the way.

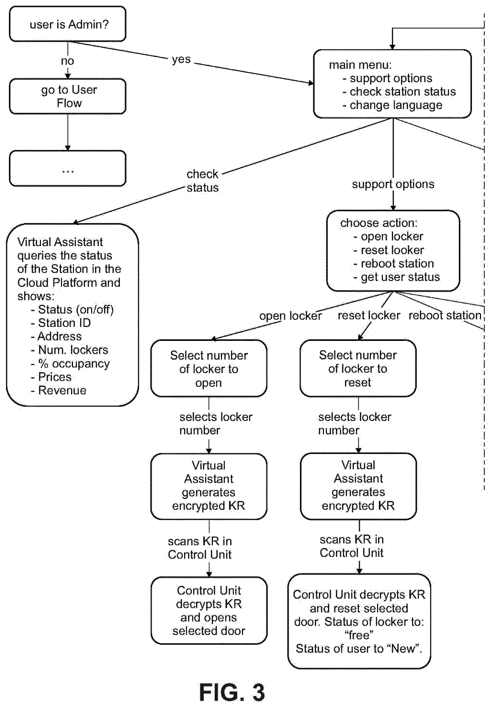

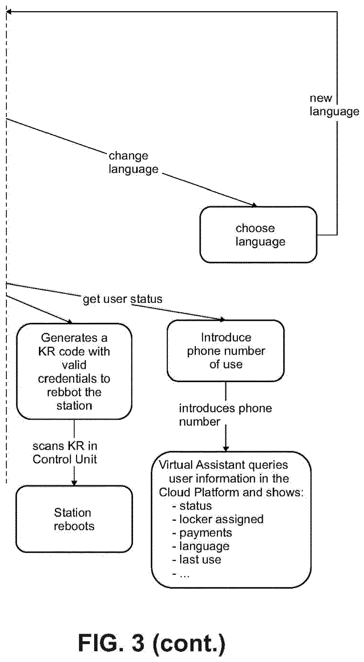

The system also enables a conversational tree flow for admins, as shown in Figure 3. The flowchart shown illustrates the intricate ecosystem of interactions that converge to provide a seamlessly coordinated Admin experience.

Thus, the Virtual Assistant on the chat incorporates a different flow for Admins. This flow allows, through queries and updates to the cloud-based databases, to perform administrator operations directly from the conversation.

The conversational flow for admins follows the logic shown in the diagram of Figure 3:
1. Conversation Start: The user initiates the conversation with the virtual assistant by simply typing any word on the chat conversation with the contact phone number of the system.
2. Recognition of type of user: The virtual assistant queries the User ID (phone number) to the Cloud Database. The conversational flow that will be presented next, fully depends on the type of user. If the user status corresponds to "Admin" type, then a flow to generate admin-specific queries to the system and aimed to resolve issues and offer end-user support is presented.
3. Language Switch: Admins have the option to change the language of the conversation at any time.
4. Continued Personalized Responses: The virtual assistant provides information on the current status of the station of lockers, as well as offers generation of KR codes to perform on-site admin operations.
5. Station Status Check: The virtual assistant queries the Cloud Database to check the status of the station of lockers at the requested location and displays information regarding the status (online, offline, in maintenance mode), the occupancy of the station, the prices, the revenue, the number of lockers...
6. KR Creation: A dynamic and encrypted QR is created, named Key Response, which contains the Key information to use the system. Each KR generated by the virtual assistant is dynamic and only valid for the time defined by the system. Admin KR codes contain specific information to perform on-site operations such as open a door, reset a deposit or reboot the system.
7. User Status Check: The status of a user can be checked through the same conversation, by querying the Cloud Database and checking the status of a given user. Admins only need to follow the conversation flow offered by the Virtual Assistant and introduce the user ID under revision. This information is instantly synchronized with the databases, retrieving and displaying user information in real-time.
8. KR Validation at the Kiosk: The KR code generated in the WhatsApp conversation can only be decrypted by the software running on the control unit of the locker cabinet, and therefore, the Kiosk is responsible for authorizing actions if all encrypted KR fields meet the necessary conditions. Admins therefore can resolve issues on-site even in the most adverse conditions (if the Control Unit lacks network connection), since the system is capable of verifying KR credentials and authorizing admin actions.
9. Locker Opening: The Control Unit verifies the authenticity of a KR and then the locker is electronically unlocked, and the Admin receives a notification indicating that the locker has been opened.
10. Locker Reset: The Control Unit verifies the authenticity of a KR and then the locker is reset in the database. This means that the status of the given locker transitions from "in_use" or "blocked" to "Free". At the same time, if the locker was occupied by a user, the status of the user transitions from "in_use" or "blocked" to "New". The Admin receives a notification indicating that the locker has been reset.
11. Station Reboot: The Control Unit verifies the authenticity of a KR and then the Control Unit shuts down and restarts immediately. Once the system reactivates again, Admin receives a notification indicating that the system is online and displays status information after the restart.

This agile and highly coordinated process ensures that Admins can offer secure and efficient support and receive real-time information of the system.

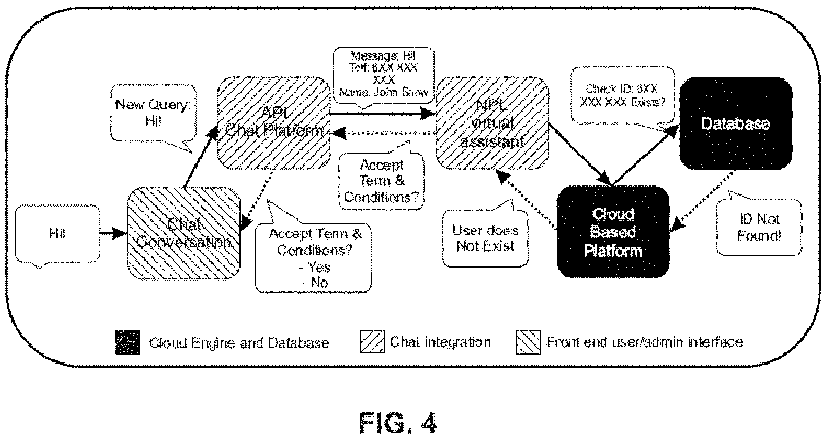

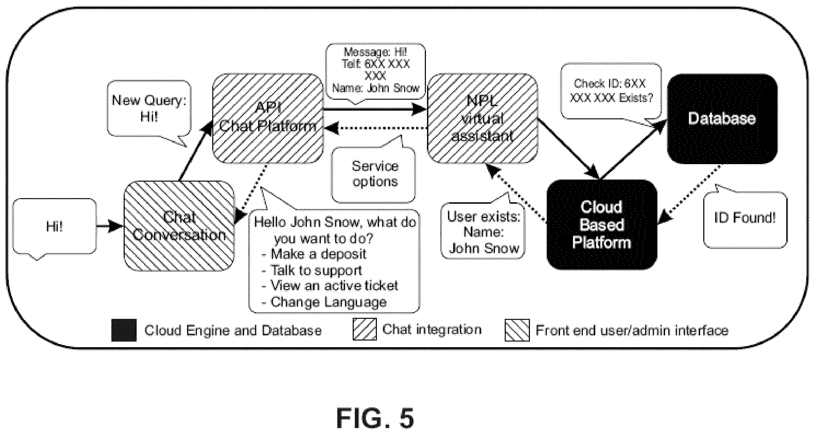

Figure 4 shows an exemplary embodiment of the procedure of the invention. In particular, it shows the first steps, in which the user starts a conversation with the virtual assistant and the user does not yet exist in the database. Figure 5 shows an exemplary embodiment similar to the one shown in Figure 4 but in a case where the user is already in the database.

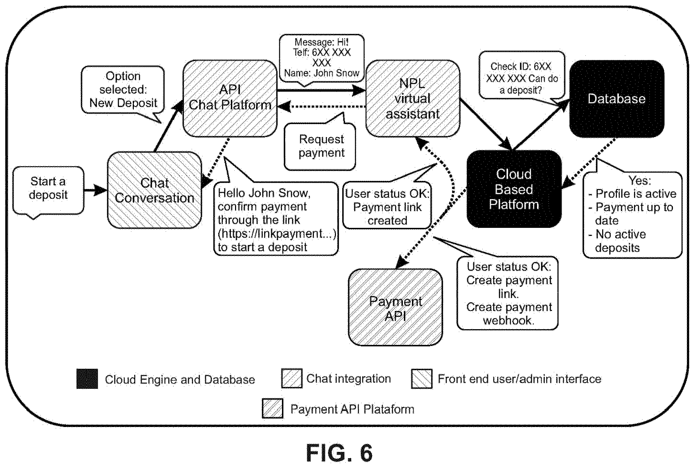

Figure 6 shows the continuation of the procedure of the invention shown in figures 4 and 5. In Figure 6 are shown the steps of requesting to make a new deposit and the creation of the payment link.

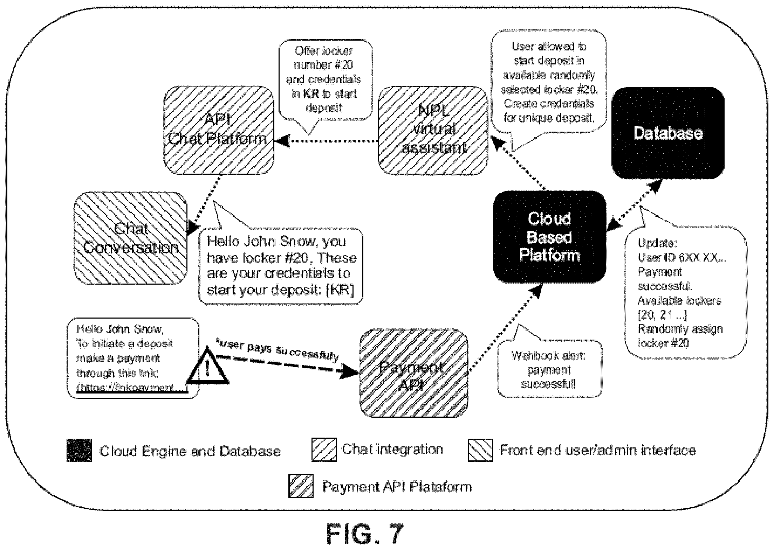

Figure 7 shows the final steps of the exemplary embodiment of figures 4 to 6 of the procedure of the invention. In said figure, once the payment platform API webhook confirms that the payment has been received, the Cloud Engine is notified and it makes a decision to update the relevant databases and continue the conversation with the user by offering an available locker, selected randomly, and generating encrypted credentials in a KR code to be able to make the deposit.

## Claims

1. Smart locker conversational access procedure comprising:
- starting a conversation as a response of a request form a user on a chat/conversational platform by using Natural Language Processing techniques;
- identifying the user by its telephone number;
- querying database for checking availability as a response of a request to open a locker;
- generating a Key Response code for opening a locker;
- decrypting the KR provided by the user to a locker cabinet comprising the locker information; and
- assigning a locker of the locker cabinet.

2. Smart locker conversational access procedure according to claim 1, further comprising the steps of generating automatic payment links based on a pay-per-use rate of the lockers service; and validating payments, before the step of generating a Key Response code.

3. Smart locker conversational access procedure according to claim 1, wherein in the step of assigning a locker, the locker to be opened is selected randomly.

4. Smart locker conversational access procedure according to claim 1, wherein the locker cabinet comprises data for decrypting the KR code, even without network connection.

5. Smart locker conversational access procedure according to claim 1, wherein the KR is a QR encrypted.

6. Smart locker conversational access procedure according to claim 1, wherein the KR comprises data of: location of the locker cabinet, user ID, user type, payment time, locker ID and scheduled usage time.

7. Smart locker conversational access procedure according to claim 1, wherein the KR is changed dynamically, being valid for a time predefined.

8. Smart locker conversational access procedure according to claim 1, wherein the conversation is performed by using a trained NLP algorithm trained to generate conversational dialogues.

9. Smart locker conversational access procedure according to claim 1, further comprising a step of switching language as response of a request from a user in the conversation using NLP.

10. Smart locker conversational access procedure according to claim 1, further comprising a step, after the step of identifying the user, of identifying if the user has admin rights, if so allowing said user, to request status of the locker cabinet, open lockers, restart lockers and/or reboot the locker cabinet in the conversation by using NLP.

11. Smart locker conversational access procedure according to claim 10, further comprising a step of resetting a locker, changing its status from "in use" or "blocked" to "free" or "new" if the locker is occupied.

12. Smart locker conversational access procedure according to claim 10, further comprising a step of rebooting station as a request of a user with admin rights, thus, shutting down and restarting the control unit, then, sending status information.

13. Smart locker system comprising:
- at least one locker cabinet comprising:
∘ one or more lockers comprising electronic locks;
∘ a control unit configured to decrypt and validate a Key Response code comprising: a processing unit and a QR reader and/or a pin pad;
- a cloud-based locker engine module, comprising:
∘ a chat management unit using Natural Language Processing techniques for managing a conversation with a user;
∘ a database, comprising data of the state and usage of lockers and of the users, and being connected to the chat management unit for synchronizing data;
∘ A backend module connected to the chat management unit and the database and configured to trigger actions based on input from the database and from the conversations with users from the chat management unit;
- a communications module, connecting the control unit of the locker cabinet to the cloud-based locker engine module.

14. Smart locker system according to claim 13, further comprising a back-office module for admins configured to store information of usage of the system including chat conversations with users for support and traceability of usage.

15. Smart locker system according to claim 13, wherein the chat management unit comprises end-to-end encryption and the cloud-based locker engine module comprises a secured and encrypted connection between the chat management unit and the database.
